# EUROPEAN PATENT APPLICATION

(11) **EP 4 783 656 A1**
(43) Date of publication of application: **29.07.2026**
(21) Application number: 25305094.2
(22) Date of filing: 27.01.2025
(51) Int. Cl.: H04W 24/10

(54) **ENERGY DATA COLLECTION REPORTING METHOD**

(71) Applicant: InterDigital CE Patent Holdings, SAS, 75017 Paris (FR)
(72) Inventor: AUMONT, Franck, 35770 VERN SUR SEICHE (FR); REINHARD, Erik, 35630 HEDE-BAZOUGES (FR); LE MEUR, Olivier, 35160 TALENSAC (FR); DEMARTY, Claire-Helene, 35520 MONTREUIL LE GAST (FR); BLONDE, Laurent, 35235 THORIGNE-FOUILLARD (FR)
(74) Representative: Vossius & Partner Patentanwälte Rechtsanwälte mbB

(57) **Abstract**

A wireless transmit and receive unit (WTRU) and method for energy data collection reporting are disclosed. The WTRU includes a processor and a transceiver communicatively coupled to the processor. The processor and transceiver operating to monitor an energy consumption and/or a carbon emission of a provisioning session. The monitoring may occur at one of a plurality of levels including at a provisioning level, a media delivery session level, and a component level of a media delivery session. The processor and transceiver may further operate to receive reports on energy related information for at least one of a PDU session component, a PDU session and a slice. The received reports may be at least one level of granularity selected from a WTRU level, a RAN level, a CN level during downlink or uplink media delivery sessions. The WTRU may further include a media session handler configured to perform collecting and reporting of energy consumption. The WTRU may further include a media player configured to receive and play video content within the WTRU. The WTRU may further include a display configured to receive a stream from the media player to depict the stream to a user. The reporting may occur via an EoS metrics reporting configuration. The EoS metrics reporting configuration may define rules for EoS metrics collection. The WTRU may request the AF to retrieve energy metrics for the media player level. The energy metrics may include at least one of carbon intensity, energy consumption, and power consumption. The reporting may occur via a EoS metric scheme. The reporting may be capable of accounting for privacy issues associated with client data.

## Description

### BACKGROUND

Generally, when an AP, e.g. OTT streaming application, delivers some media contents on a 5G mobile network, the AP starts by identifying the application functions available in the network in accordance with the type of delivery it wishes to realize, i.e., 5G Media Streaming, 5G Real Time Communication (RTC), .... When the appropriate application function (AF) is identified, the AP creates a provisioning session at the dedicated standardized interface of the selected AF, Reference point M1. This interface may not provide the possibility to indicate any energy requirements and configure them accordingly for the media delivery sessions of a provisioning session.

### SUMMARY

According to the present description, a system may be used to monitor and expose the energy consumption and/or the carbon emission of a provisioning session at different levels: at the provisioning level itself, at the media delivery session level, or at the component level of a media delivery session.

The present systems and methods relate to media delivery (e.g. Video) from the content provider up to the end-user device in a mobile network. This invention provides a solution for the media application provider or any other authorized consumer to subscribe to receive reports on energy related information for PDU session component and/or PDU session and/or slice with different granularities: UE, RAN, Core Network when downlink or uplink media delivery sessions have been initiated by the application function and are on the way.

According to the present description, a system may be used to monitor and expose the energy consumption and/or the carbon emission of a provisioning session at different levels: at the provisioning level itself, at the media delivery session level, or at the component level of a media delivery session. After adding the exposing or monitoring energy of service specification in the policy template, the media application provider may require receiving reports to track the energy consumption and/or the carbon emissions of the provisioning session according to the information it provides in the energy of streaming specification from the policy template.

A wireless transmit and receive unit (WTRU) and method for energy data collection reporting are disclosed. The WTRU includes a processor and a transceiver communicatively coupled to the processor. The processor and transceiver operating to monitor an energy consumption and/or a carbon emission of a provisioning session. The monitoring may occur at one of a plurality of levels including at a provisioning level, a media delivery session level, and a component level of a media delivery session. The processor and transceiver may further operate to receive reports on energy related information for at least one of a PDU session component, a PDU session and a slice. The received reports may be at least one level of granularity selected from a WTRU level, a RAN level , a CN level during downlink or uplink media delivery sessions. The WTRU may further include a media session handler configured to perform collecting and reporting of energy consumption. The WTRU may further include a media player configured to receive and play video content within the WTRU. The WTRU may further include a display configured to receive a stream from the media player to depict the stream to a user. The reporting may occur via an EoS metrics reporting configuration. The EoS metrics reporting configuration may define rules for EoS metrics collection. The WTRU may request the AF to retrieve energy metrics for the media player level. The energy metrics may include at least one of carbon intensity, energy consumption, and power consumption. The reporting may occur via a EoS metric scheme. The reporting may be capable of accounting for privacy issues associated with client data.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates an application architecture used to carry media components with a mobile network;
FIG. 3 illustrates an application architectures used to carry media components within a mobile network;
FIG. 4 illustrates a reference architecture for data collection and reporting in reference point notation;
FIG. 5 illustrates data collection and reporting architecture instantiation for 5G Media Streaming;
FIG. 6 illustrates an enhancement of the 5G Media Streaming Data collection and reporting of the 5GMS AF;
FIG. 7 illustrates a first example where the EoS metrics collection and reporting is configured by the 5GMSd AF;
FIG. 8 illustrates a second example where the EoS metrics collection and reporting is configured by the 5GMSd AF; and
FIG. 9 illustrates a third example where the EoS metrics collection and reporting is configured by the 5GMSd AF.

### DETAILED DESCRIPTION

The present examples provide a mobile network operator (MNO), a service provider or an application provider to enable the monitoring of the energy related information in order to reduce its energy and carbon impact to preserve the planet. The media delivery in a mobile ecosystem implies an MNO, an application provider, a service provider (collectively referred to as application provider or AP) and an end-user. A service layer agreement may exist between these parties, i.e., end-user subscription, agreement between the AP and the MNO. Generally, such agreements do not consider the concept of "scopes" and no mechanisms exist for accounting and reporting purposes when a media delivery is realized in a mobile network ecosystem.

Generally, when an AP, e.g. OTT streaming application, delivers some media contents on a 5G mobile network, the AP starts by identifying the application functions available in the network in accordance with the type of delivery it wishes to realize, i.e., 5G Media Streaming, 5G Real Time Communication (RTC), .... When the appropriate application function (AF) is identified, the AP creates a provisioning session at the dedicated standardized interface of the selected AF, Reference point M1. This interface may not provide the possibility to indicate any energy requirements and configure them accordingly for the media delivery sessions of a provisioning session. According to the present description, a system may be used to monitor and expose the energy consumption and/or the carbon emission of a provisioning session at different levels: at the provisioning level itself, at the media delivery session level, or at the component level of a media delivery session.

After adding the exposing or monitoring energy of service specification in the policy template, the media application provider may require receiving reports to track the energy consumption and/or the carbon emissions of the provisioning session according to the information it provides in the energy of streaming specification from the policy template.

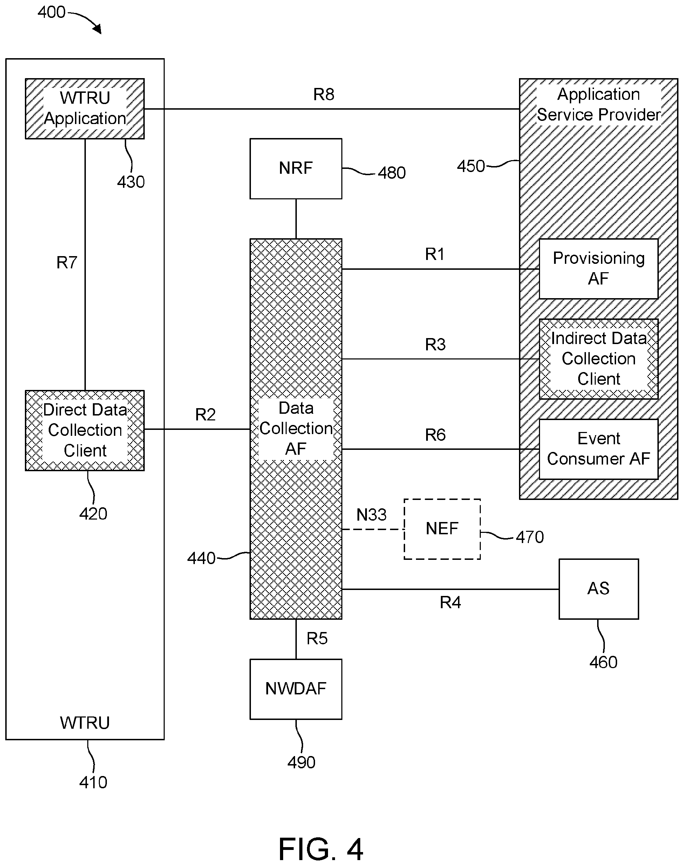

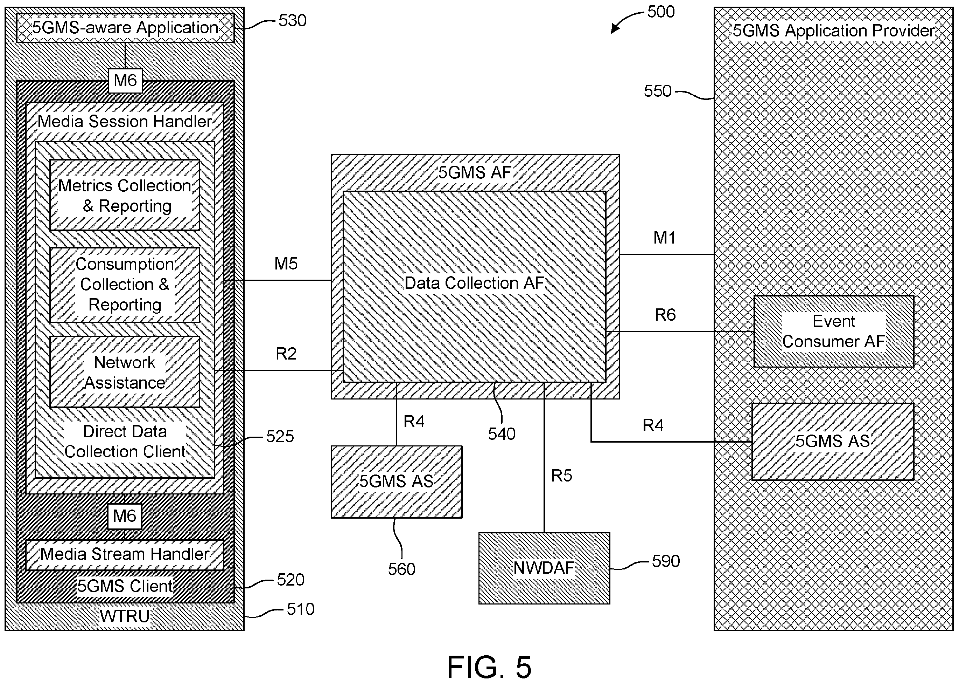

Generally, a generic reference architecture for data collection, reporting and subsequent exposure of WTRU data exists as illustrated in FIG. 4 and FIG. 5, dedicated for 5GMS. This is an element of the application function, the data collection AF, provided by either the 5G System itself (embodied in a particular deployment by an MNO) or the application service provider (ASP). The data collection AF can also retrieve some data from NWDAF, NEF or AS to get information from the CN or the AS. None of this information contains some Energy related information.

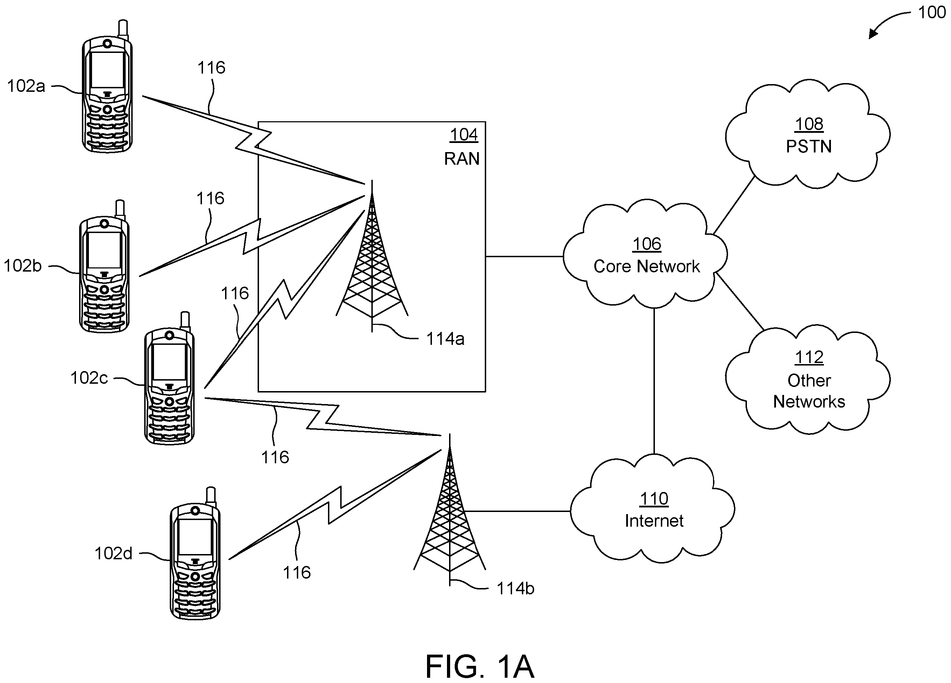

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over intemet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

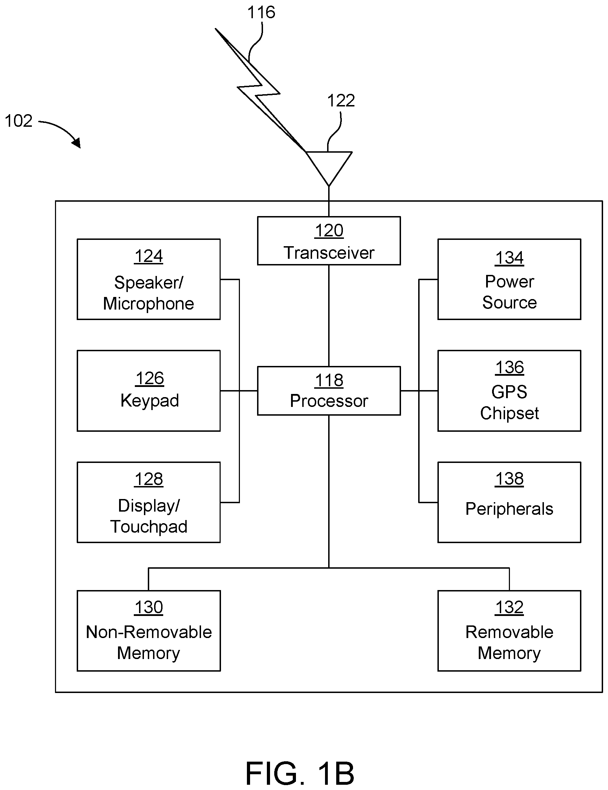

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

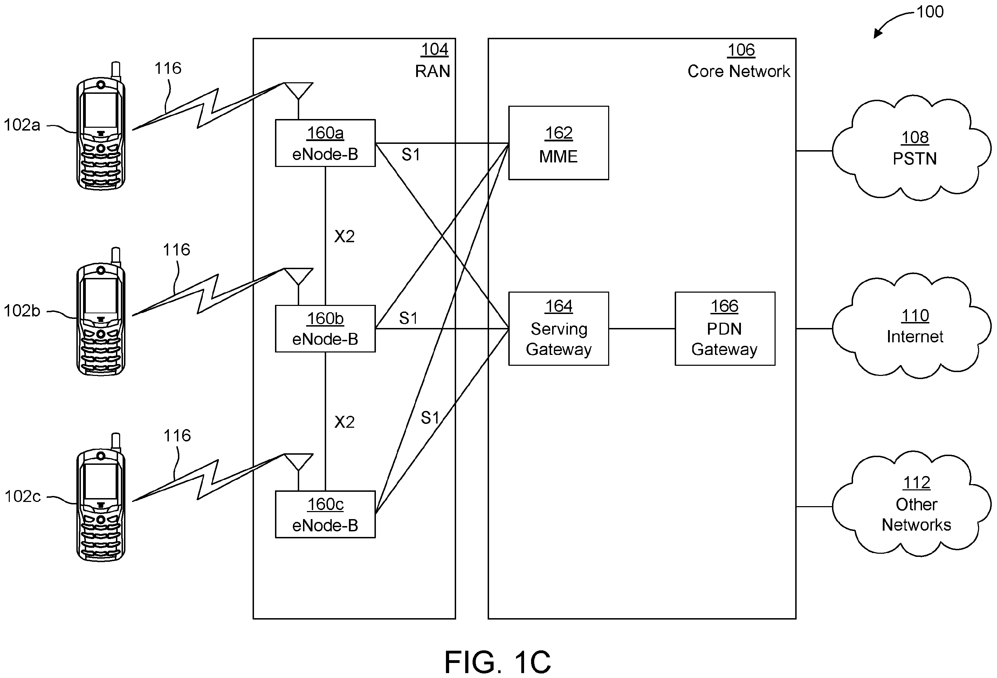

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.1 1af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

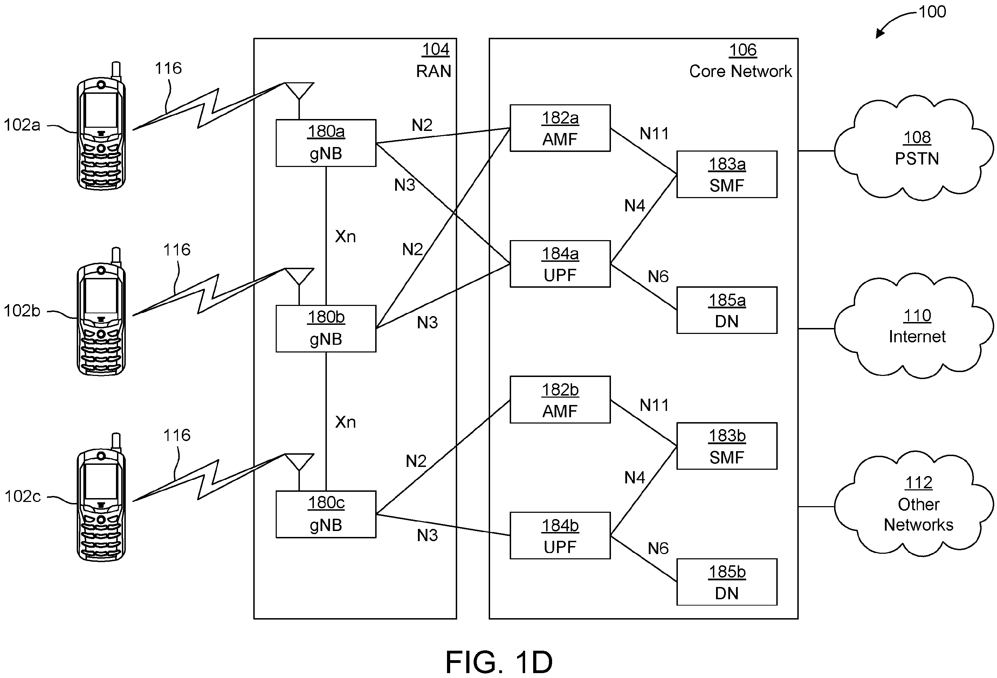

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTls) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The present description is directed to media delivery (e.g., Video) from the content provider up to the end-user device in a mobile network. The present description provides benefits includes reducing energy consumption in media delivery stems from a concern for the current state of the climate, and the need to mitigate the effects of human-induced climate change.

The organization Greenhouse Gas Protocol "provides standards, guidance, tools and training for business and government to measure and manage climate-warming emissions." The first edition of their reporting standard was published in 2001, establishing a reporting framework for businesses. Relative to a given company, the concept of "scopes" is introduced, which delineate direct and indirect emission source, and are used for accounting and reporting purposes. The reporting principally involves the six greenhouse gases that are defined in the Kyoto protocol: carbon dioxide (*CO*₂), methane (*CH*₄), nitrous oxide (*N*₂*O*), hydrofluorocarbons (HFCs), perfluorocarbons (PFCs) and sulphurhexafluoride (*SF*₆). Scopes 1 (sources owned or controlled by a company giving rise to direct greenhouse gas) and 2 (the electricity purchased and consumed by a company gives rise to greenhouse gas emissions) are defined in [5], and Scope 3 (All other indirect emissions) is defined in [6].

A mobile system in a context of media delivery implies several businesses (Content providers, MNO, Application providers, Service providers, network equipment providers (Core Network, gNB , ...) and WTRU device manufacturers which have to report energy related information to regulators. This is the reason why mechanisms to expose and monitor such information are needed.

Thus, the present description is in the field of communications mobile systems for media (e.g. video, audio, subtitle, teletext,... ) streaming and real time communication, aiming at providing mechanisms to enable a mobile network operator, a service provider, an application provider, a 3GPP core network provider, a RAN provider and a WTRU device manufacturer to control, collect, estimate and expose energy-related information.

The increase of video services with multiple resolutions from SD to HD to 4K and soon to 8K and beyond, as well as the number of delivery functions, the number of codecs, the number of different end user device profiles, the number of video formats (high dynamic range versus standard dynamic range), the introduction of wider color gamuts has brought about a corresponding increase in energy requirements of end-user devices and 3GPP infrastructures which is not consistent with the global need to reduce energy consumption while maintaining a high Quality of Experience (QoE) for the end-user.

Different architectures are defined by 3GPP to carry media components over the 4G, 5G and beyond mobile networks from the application provider up to the end-user.

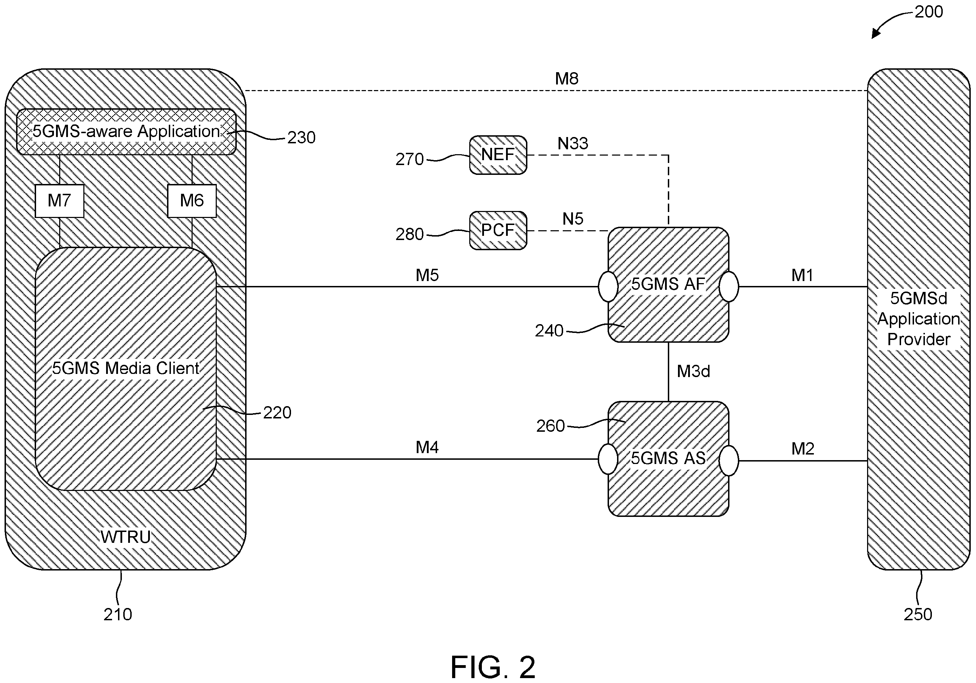

FIG. 2 illustrates an application architecture 200 used to carry media components with a mobile network. Architecture 200 illustrates a general 5GMS media streaming architecture, for example. Architecture 200 includes a WTRU 210 communicatively coupled to a 5GMSd application provider 250. WTRU 210 may include a 5GMS-aware application 230 and a 5GMS media client 220. 5GMS application provider 250 may uses 5GMS for streaming services. 5GMS application provider 250 may provide a 5GMS-aware application 230 on WTRU 210 to make use of 5GMS client and network functions using interfaces and APIs defined in 5GMS. These client and network functions include a 5GMS AF 240 that is an application function dedicated to 5G Media Streaming. These client and network functions include a 5GMS AS 260 that is an application server dedicated to 5G media streaming. These client and network functions include a 5GMS media client 220 that is a WTRU 210 internal function dedicated to 5G Media Streaming. 5GMS media client 220 may be a logical function and its subfunctions may be distributed within WTRU 210. 5GMS AF 240 and 5GMS AS 260 are data network (DN) functions and communicate with WTRU 210. Functions in trusted DNs, e.g., a 5GMS AF 240 in the Trusted DN, are trusted by the operator's network and, as such AFs may directly communicate with the relevant 5G core functions. Functions in external DNs, e.g., a 5GMS AF 240 in the External DN, may only communicate with 5G core functions via the NEF 270 or PCF 280.

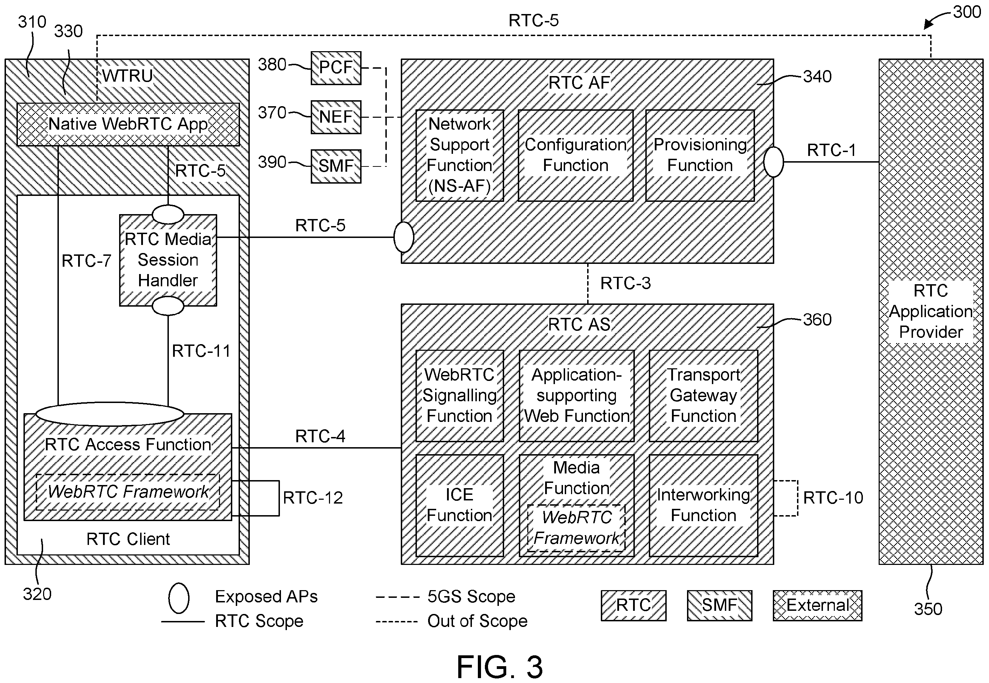

FIG. 3 illustrates an application architecture 300 used to carry media components within a mobile network. Architecture 300 may operate as a real-time communication architecture. Architecture 300 provides a mapping of RTC functions to generalized media delivery architecture. Architecture 300 includes a WTRU 310 communicatively coupled to an RTC application provider 350. WTRU 310 may include a native WebRTC application 330 and an RTC client 320. RTC application provider 350 may provide native WebRTC application 330 on WTRU 310 to make use of RTC client. This includes using an RTC AF 340, an RTC AS 360, and an RTC client 320 that is a WTRU 310 internal function. RTC client 320 may be a logical function and its subfunctions may be distributed within WTRU 310. RTC AF 340 and RTC AS 360 are data network (DN) functions and communicate with WTRU 310. Functions in trusted DNs, e.g., an RTC AF 340 in the Trusted DN, are trusted by the operator's network and, as such AFs may directly communicate with the relevant functions. Functions in external DNs, e.g., an RTC AF 240 in the External DN, may only communicate with 5G core functions via the NEF 370, PCF 380, or SMF 390.

FIG. 4 illustrates a reference architecture 400 for data collection and reporting in reference point notation. Architecture 400 includes an application service provider 450 including an event consumer AF, a provisioning AF, and an indirect data collection client. Application service provider 450 communicatively coupled with a data collection AF 440. Data collection AF 440 is communicatively coupled to an AS 460, a NWDAF 490, NRF 480 and NEF 470. WTRU 410 includes a direct data collection client 420 and a WTRU application 430.

FIG. 5 illustrates a data collection and reporting architecture 500 instantiation for 5G media streaming. Architecture 500 includes an 5GMS application provider 550 including an event consumer AF, which is a consumer of 5G media streaming events from the data collection AF 540, and a 5GMS AS. 5GMS application provider 550 communicatively coupled with a data collection AF 540 for 5G media streaming in 5GMS AF. Data collection AF 540 is communicatively coupled to a 5GMS AS 560, which may serve the role of AS data collection client, a NWDAF 590, and a direct data collection client 525 for 5G media streaming in the media session handler. Data collection AF 540 takes logical responsibility for WTRU 510 data collection activities of the metrics collection and reporting and consumption collection and reporting subfunctions and the subsequent reporting of WTRU 510 data via reference point M5. Data collection AF 540 takes logical responsibility for the logging of ANBR-based network assistance invocations by the network assistance subfunction and the subsequent reporting to data collection AF 540 in 5GMS AF. WTRU 510 includes a 5GMS client 520 and a 5GMS-aware application 530. 5GMS client 520 includes a media stream handler and a media session handler 525. Media session handler 525 includes a metrics collection and reporting module, a consumption collection and reporting module and network assistance.

Data collection AF 540 may comply with regional regulatory requirements and may be further limited by MNO policy. Data collection AF 540 may support data access profile to specify a set of data processing operations that need to be performed by data collection AF 540 on WTRU 510 data and to expose the authorized data to event consumers. The media application provider may provision a metrics reporting configuration resource for a particular media delivery provisioning Session at reference point M1. The resource may be defined and allows the media application provider 550 to set a configuration to select the metrics that are to be reported and specify how they are reported. The metric may be collected by the data collection entity from the consumption reporting functions of the media client and subsequently of the media session handler 525 at reference point M5 using a service access information resource. The AF function may be a trusted function, but it can be generalized to an untrusted function. The 5G media streaming architecture 500 may be generalized to any other architecture, e.g. RTC architecture.

Generally, the 3GPP ecosystem defines several architectures to deliver media content from an application provider but, in these architectures, there does not exist any mechanism to configure and control energy consumption of the media delivery system from an application function (AF) if a media application provider requests it. The application provider may configure a set of energy related parameters to indicate the type of monitoring to use and to define energy credit limits at different levels: provision session, media delivery session or media component of the media delivery session. The application function can report WTRU related information but not energy related PDU session or slice information and does not include any energy related information.

The 3GPP ecosystem defines some application functions to deliver media content from a media application provider to an end-user and offers video and entertainment services. As described herein a media application provider (e.g., a video streaming service provider) may reduce the environmental impact of its media services (e.g., Video), for example, as requested by regulators or mobile network operators. The media application provider may adapt dynamically its media delivery mode to be energy efficient, e.g., for content consumed by large audiences. The media application provider may activate or deactivate this energy media delivery mode dynamically because it is subject to a regulatory environment who, especially in Europe, requires the reporting of its direct impact as well as the impact caused in its value chain. The use of the mechanisms allow activation of the exposing and the monitoring of the delivery energy of the media provisioned by the media application provider thanks to energy policy templates. The present examples adapt the existing reporting to allow an energy management function in the media application provider to subscribe and receive reporting quantitative information about the energy and/or carbon impact of a media delivery in the 5G system. The energy management function expects to receive quantitative energy information with different granularities (WTRU, group of WTRU, RAN, CN, Slice, Functions, ...) when the media application provider provisions media to be distributed up to WTRUs. The reports content shall vary depending on the privacy rights of the energy management function (i.e. SLA, role, ...).

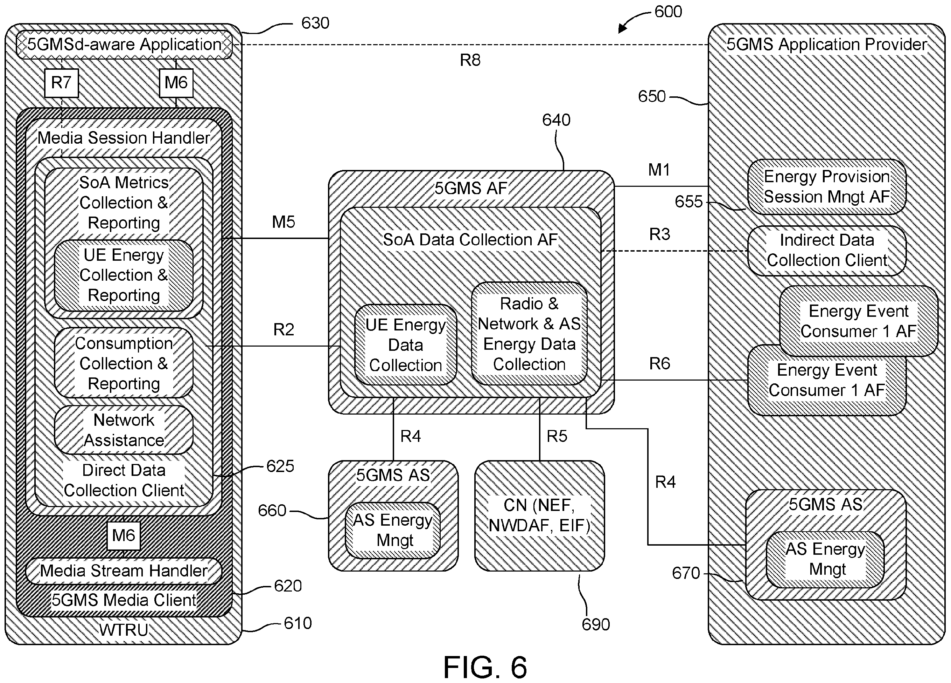

FIG. 6 illustrates an architecture 600 relevant to the 5G media streaming data collection and reporting of the 5GMS AF 640. In the direct data collection client 625 of WTRU 610 5GMS media client 620, the metrics collection and reporting is updated with WTRU 610 energy related information in addition to the state of the art ones. The reporting of this new energy information to the data collection AF 640 is performed via the R2 existing reference point. The energy information reports are processed according to the data access profile provided by an energy provision session management 670 entity which is responsible for controlling the information exposed to the energy event consumer AF.

Two new types of data collection are created in data collection AF 640 in order to store the energy related information. On one side, WTRU 610 energy related information and on another side, the energy information which has to be reported to the media application provider 650 but which cannot be retrieved from WTRU 610, such as radio access network (i.e. RAN) functions of the core network (i.e. CN, Application server (i.e. AS), for example.

In the AS module 660 a new entity is created, the AS energy management entity, which is responsible for providing the energy related information of the AS. For the CN 690, the EIF function is responsible for providing the energy related information from the CN 690.

In the media application provider 650, an energy event consumer (i.e., the Energy Management function discussed above) subscribes to the new energy reports through the R6 reference point.

The energy provision session management AF 655 is instantiated in 5GMS media application provider 650 and is responsible for provisioning the resources to manage the energy of the provisioning sessions of media application provider 650. Energy provision session management AF 655 may create some energy policy templates resources, i.e. with EoS specification, and provision them to the AF 640 in the context of a provisioning session for media streaming. Energy provision session management AF 655 may create some metrics reporting configuration (as described herein) resources (see Table 1) to enable the reporting of the energy metrics (EoS Metrics) that media application provider 650 wants to be notified to share to the regulators or its own use to reduce its impact in terms of energy consumption and carbon emissions.

An EOS metric reporting configuration may be provided. The metrics reporting configuration resource is generally dedicated to quality of experience (QoE) metrics. This resource may be adapted to cover the support of energy Metrics, EoS Metrics and not only QoE Metrics as provided in Table 1. Media application provider 650 may instantiate the reporting configuration resource with a new type of scheme, the EoS scheme which defines the format of the energy related information reporting. A difference is that the scope for the scheme property is increased in order to support either QoE metrics or EoS metrics.

The sample Percentage property may not be present when the type of scheme is the EoS scheme because more modes for sampling media delivery sessions are possible.

A new property *energyRelatedInfoReportMode* may be created to indicate how the EoS metric report is performed by the Media Session Handler for the sampled media delivery sessions.

The urlFilters, sampling Period, location Filter and metrics may support EoS metric in addition to QoE metric.

The properties positive Crossing Thresholds and negative Crossing Thresholds may be present when the type of scheme is the EoS scheme.

**Table 1: Definition of EoSMetricsReportingConfiguration resource**

| **Property name** | | **Type** | **Cardinality** | **Description** |
|---|---|---|---|---|
| *metricsReportingConfigurationI d* | | Resourceld | 1..1 | An identifier for this Metrics Reporting Configuration assigned by the Media AF when the resource is created that is unique within the scope of the enclosing Provisioning Session. |
| *sliceScope* | | array(Snssai) | 0..1 | The set of network slice(s) for which metrics collection and reporting shall be executed in connection with this metrics reporting configuration (see NOTE 1). |
| | | | | If present, the array shall identify at least one network slice. |
| | | | | If absent, metrics shall be collected and reported for media delivery sessions within the scope of the parent Provisioning Session regardless of network slice. |
| *scheme* | | Uri | 0..1 | The QoE or EoS metrics scheme associated with this Metrics Reporting Configuration which indicates the required format of metrics reports. |
| | | | | The set of QoE metrics schemes valid for use in 5G Media Streaming along with their respective scheme identifiers is specified in clauses 4.7.5 and 7.8.1 of TS 26.512 [6]. |
| | | | | The QoE metrics scheme valid for use in RTC along with its respective scheme identifier is specified in clause 15 of TS 26.113 [7]. |
| | | | | Omitting this property signals to the Media AF that metrics reporting is currently disabled for the Provisioning Session in question. |
| | | | | The EoS metrics scheme indicates the required format of the EoS metric report with the information of the sampled media delivery sessions fetched by the Media Session Handler for the WTRU energy information, the EIF for the Core Network energy information, the AS for the Application server energy information for (see 4.4 for details) |
| *dataNetworkName* | | Dnn | 0..1 | Identifies the Data Network which shall be used when sending metrics reports. |
| | | | | If not specified, the default Data Network shall be used. |
| *reportingStartOffset* | | DurationSec | 0..1 | The time offset (expressed in seconds) from the start of a media delivery session when the Media Client is required to begin submitting metrics reports. The value shall not be negative. |
| | | | | If omitted, the value of this parameter is assumed to be zero, i.e., directing the Media Client to start reporting metrics from the start of the media delivery session. |
| *reportingDuration* | | DurationSec | 0..1 | The period of time (expressed in seconds) measured relative to the reporting start point, after which the Media Client is required to stop reporting metrics. The value shall not be negative. |
| | | | | If set to zero, a single report shall be sent at *reportingStartOffset.* |
| | | | | If omitted, reporting is required to continue until the end of the media delivery session. |
| *reportingInterval* | | DurationSec | 0..1 | The time interval between successive metrics reports to be sent by the Media Session Handler. The value shall be greater than zero. |
| | | | | If not specified, a single final report shall be sent after the media delivery session has ended. |
| | | | | |
| *deliverySessionSample* | | object | 0..1 | This object contains the information to select the delivery sessions for which the reports have to be sent |
| *samplingMode* | | integer | 0..1 | If samplingMode is 0, reports shall be sent for all media delivery sessions |
| | | | | If samplingMode is 1, reports shall be sent for a proportion of the media delivery sessions based on the value of the samplingPercentage property. |
| | | | | If samplingMode is 2, reports shall be sent for the media delivery sessions which have at least one component with a MIME content type in the componentContentTypeList property and based on the value of the samplingPercentage property |
| | | | | For other samplingMode values, the reports shall be sent for all the media delivery sessions. |
| | | | | If the samplingMode property is not present, the reports shall be sent for all the media delivery sessions |
| *samplingPercentage* | | Percentage | 0..1 | The proportion of media delivery sessions for which EoS metrics shall be reported, expressed as a floating-point value between 0.0 and 100.0. |
| | | | | If not specified, reports shall be sent for all media delivery sessions. |
| *deliverySessionEnergyRelatedI nformation* | | object | 0..1 | This object contains the energy related information that should be reported at a time |
| *energyMetricReportMode* | | integer | 1..3 | This property indicates what energy information shall be present in the EoS metric report. |
| | | | | If *energyMetricReportMode is 0, the EoS report shall contain, for each sampled media delivery session, the energy metric value corresponding to the sum of the energy metric value of all the delivery session components, e.g. one session with one audio and video components, the sum of the energy metric value* of *the video and the energy metric value of the audio is reported* If *energyMetricReportMode is 1, the EoS report shall contain, for each sampled media delivery session, a list of energy metric values corresponding to the energy metric value* of *each component. All the component* of *each sampled media delivery session or the ones selected by the below componentContentTypeList property.* |
| | | | | If *energyMetricReportMode is 2, the EoS report shall contain an energy metric value corresponding to the sum of the energy metric value of all the active sampled media delivery sessions.* |
| | | | | Other values are kept for future use. |
| | | | | If the report shall contain all the different modes, several instances of this property are present in the reporting configuration resource. |
| *energyMetricReportType* | | integer | 1..3 | This property indicates the type of the energy metric value in the EoS metric report. |
| | | | | If 0, the energy metric value *in the report is the carbon intentity in* 9 CO₂-e / Wh. |
| | | | | If 1, the energy metric value *in the report is the energy consumption in* Wh |
| | | | | If 2, the energy metric value *in the report is the power in* W. |
| | | | | Other values are kept for future use. |
| | | | | If the report shall contain all the different types of the energy metric value, several instances of this property are present in the reporting configuration resource. |
| *componentContentTypeLi st* | | array(string) | 0..1 | A list of MIME type component for which reports shall be sent, e.g. video/mp4 |
| *energyMetricContribution RatioFlag* | | Boolean | 0..1 | This property indicates if the contribution ratio information between WTRU, RAN and CN shall be present in the report. |
| *urlFilters* | | array(string) | 0..1 | If present, a non-empty list of Media Entry Point URL patterns for which QoE or EoS metrics shall be reported. |
| | | | | If not specified, reporting shall be done for all media delivery sessions initiated within the scope of the parent Provisioning Session. |
| *samplingPeriod* | | DurationSec | 1..1 | The time interval the Media Client should wait between sampling the QoE or EoS metrics specified by this Metrics Reporting Configuration. The value shall be greater than zero. |
| *positiveCrossingThresholds* | | map(Uri -> array(Float)) | 0..1 | If present, a non-empty map of QoE or EoS metrics to their respective threshold values. |
| | | | | - The index of the associative array shall be the fully-qualified term identifier URI of a metric specified in annex E of TS 26.512 [6] or annex C of TS 26.113 [7]. |
| | | | | - The value of each associative array member shall be an array of floating-point threshold values. |
| | | | | A metric in this associative array shall be reported once when its value exceeds one of the associated threshold values, and shall not be reported again until it falls below that threshold and subsequently exceeds it. |
| *negative Crossing Thresholds* | | map(Uri -> array(Float)) | 0..1 | If present, a non-empty map of QoE or EoS metrics and their respective threshold values. |
| | | | | - The index of the associative array shall be the fully-qualified term identifier URI of a metric specified in annex E of TS 26.512 [6] or annex C of TS 26.113 [7]. |
| | | | | - The value of each associative array member shall be an array of floating-point threshold values. |
| | | | | A metric in this associative array shall be reported once when its value falls below one of the associated threshold values, and shall not be reported again until it exceeds that threshold and subsequently falls below it. |
| *locationFilter* | | array(LocationAre a5G) | 0..1 | A list of one or more locations (see NOTE 2) where QoE or EoS metrics collection is required. When present a Media Client shall collect the metrics only when it is located in these locations and shall report them according to the other properties of the enclosing resource. |
| | | | | If omitted, QoE or EoS metrics are to be collected and reported regardless of the WTRU location. |
| *metrics* | | array(Uri) | 0..1 | If present, a non-empty list of QoE or EoS metrics depending on the scheme, each indicated using a fully-qualified term identifier from a controlled vocabulary, which shall be collected and reported by the Media Client. A controlled vocabulary of QoE or EoS metrics shall be specified by each QoE or EoS metrics scheme for use with this property. |
| | | | | If omitted, the complete (or default, as applicable) set of metrics associated with the specified metrics scheme shall be collected and reported. |
| NOTE 1: The *Snssai* data type is specified in TS 29.571 [33]. | | | | |
| NOTE 2: The *LocationArea5G* data type is specified in TS 24.558 [14]. | | | | |

An EoS Metric scheme may be defined and is applicable for both real-time media communication and media streaming communication. As an example, the new namespace urn:3gpp:metadata:2024:PSS:EoSMetrics for the scheme and the Elements and attributes of this scheme are described in Table 2.

**Table 2: Elements and attributes of the EoS Metric scheme**

| Elements and attributes | Use | Data type | Description |
|---|---|---|---|
| EoSMetrics | M | EoSMetrics:EoSMetricTyp e | An element whose attributes and sub-elements specify information of Energy of Service metrics to be reported during a Media Delivery Session. |
| **EoSMetrics**@Carbonlnte nsity | O | EoSMetrics:Carbonlntensi tyType | An element whose attributes and sub-elements specify the **Carbon intensity required to deliver the media content of a session in *g CO*₂-e** / ***Wh.*** The measure is performed on the *samplingPeriod.* |
| **EoSMetrics**@EnergyCon sumption | O | EoSMetrics:EnergyConsu mptionType | An element whose attributes and sub-elements specify the **energy required to deliver the media content of a session in *Wh.*** The measure is performed on the *samplingPeriod.* |
| **EoSMetrics**@PowerCons umption | O | EoSMetrics:PowerConsu mptionType | An element whose attributes and sub-elements specify the **power required to deliver the media content of a session *in W.*** The measure is performed on the *samplingPeriod.* |
| **EoSMetrics.**Carbonlntens ity@mediaSessionDeliver yId | M | mediaSessionDeliveryIdV ectorType | Vector of Media Delivery session Identifiers for which the carbon intensity is reported. |
| | | | If Vector size is 1 and the Media session identifier is unknown, the energy metric value corresponds to the sum of the energy metric value of all the active sampled media delivery session. |
| **EoSMetrics**.Carbonlntens ity@contributionRANRatio | O | xs:float | Carbon Intensity Contribution percentage of the RAN in the global value of the global carbon intensity |
| **EoSMetrics**.Carbonlntens ity@contributionCNRatio | O | xs:float | Carbon Intensity Contribution percentage of the CN in the global value of the global carbon intensity |
| **EoSMetrics**.Carbonlntens ity@contributionUERatio | O | xs:float | Carbon Intensity Contribution percentage of the WTRU in the global value of the global carbon intensity |
| **EoSMetrics.**Carbonlntens ity@globalCarbonlntensity | M | globalCarbonlntensityVect orType | Vector of global carbon intensities. One per Media Delivery Identifier of each session. |
| | | | Depending on the **EoSMetrics**.Carbonlntensity@mediaSessionDeliveryld prop erty, a global value corresponding to the sum of the carbon intensity of all the active sampled media delivery sessions is reported |
| **EoSMetrics.**CarbonIntens ity@componentVector | O | componentVectorType | Vector of the media delivery session components. |
| **EoSMetrics.**Carbonlntens ity.componentVector@ MIMEType | M | xs:string | The MIMEType of the component of the Media Delivery Session, e.g. video/mp4 |
| **EoSMetrics.**Carbonlntens ity.componentVector@ EnergylnfoValue | M | xs:float | The value of the energy information value of the component of the Media Delivery Session. This can be a carbon intensity, an energy consumption or a power consumption |
| **EoSMetrics.**EnergyConsu mption@mediaSessionDel iveryld | M | nediaSessionDeliveryIdV ectorType | Vector of Media Delivery session Identifiers for which the energy consumption is reported. |
| | | | If Vector size is 1 and the Media session identifier is unknown, the energy metric value corresponds to the sum of the energy metric value of all the active sampled media delivery session. |
| **EoSMetrics**.EnergyConsu mption@contributionRAN Ratio | O | xs:float | Energy consumption contribution percentage of the RAN in the global value of the global energy consumption |
| **EoSMetrics**.EnergyConsu. mption@contributionCNR atio | O | xs:float | Energy consumption contribution percentage of the CN in the global value of the global energy consumption |
| **EoSMetrics**.EnergyConsu mption@contributionUERa tio | O | xs:float | Energy consumption contribution percentage of the WTRU in the global value of the global energy consumption |
| **EoSMetrics.**EnergyConsu mption@globalEnergyCon sumption | M | globalEnergyConsumption Type | Vector of global energy consumption values. One per Media Delivery Identifier of each session. |
| | | | Depending on the **EoSMetrics**.EnergyConsumption@mediaSessionDeliveryld property, a global value corresponding to the sum of the energy consumption of all the active sampled media delivery sessions is reported |
| **EoSMetrics**.EnergyConsu mption@componentVector | O | componentVectorType | Vector of the media delivery session components. |
| **EoSMetrics.**EnergyConsu mption.componentVector @MIMEType | M | xs:string | The MIMEType of the component of the Media Delivery Session, e.g. video/mp4 |
| **EoSMetrics.**EnergyConsu mption.componentVector @EnergylnfoValue | M | xs:float | The value of the energy information value of the component of the Media Delivery Session. This can be a carbon intensity, an energy consumption or a power consumption |
| **EoSMetrics.**PowerConsu mption@mediaSessionDel iveryld | M | mediaSessionDeliveryIdV ectorType | Vector of Media Delivery session Identifiers for which the power consumption is reported. |
| | | | If Vector size is 1 and the Media session identifier is unknown, the energy metric value corresponds to the sum of the energy metric value of all the active sampled media delivery session. |
| **EoSMetrics**.PowerConsu mption@contributionRAN Ratio | O | xs:float | Power consumption contribution percentage of the RAN in the global value of the global power consumption |
| **EoSMetrics**.PowerConsu mption@contributionCNR atio | O | xs:float | Energy consumption contribution percentage of the CN in the global value of the global power consumption |
| **EoSMetrics**.PowerConsu mption@contributionUERa tio | O | xs:float | Power consumption contribution percentage of the WTRU in the global value of the global power consumption |
| **EoSMetrics.**PowerConsu mption@globalEnergyCon sumption | M | globalEnergyConsumption Type | Vector of global power consumption values. One per Media Delivery Identifier of each session. |
| **EoSMetrics.**PowerConsu mption@componentVector | O | componentVectorType | Vector of the media delivery session components. |
| **EoSMetrics.**PowerConsu mption.componentVector @MIMEType | M | xs:string | The MIMEType of the component of the Media Delivery Session, e.g. video/mp4 |
| **EoSMetrics.**PowerConsu mption.componentVector @EnergylnfoValue | M | xs:float | The value of the energy information value of the component of the Media Delivery Session. This can be a carbon intensity, an energy consumption or a power consumption |
| **Key:** | | | |
| **For attributes: M=Mandatory, O=Optional, OD=Optional with Default Value, CM=Conditionally Mandatory.** | | | |
| **For elements: <minOccurs>..<maxOccurs> (N=unbounded)** | | | |
| Elements are **bold;** attributes are non-bold and preceded with an @. | | | |

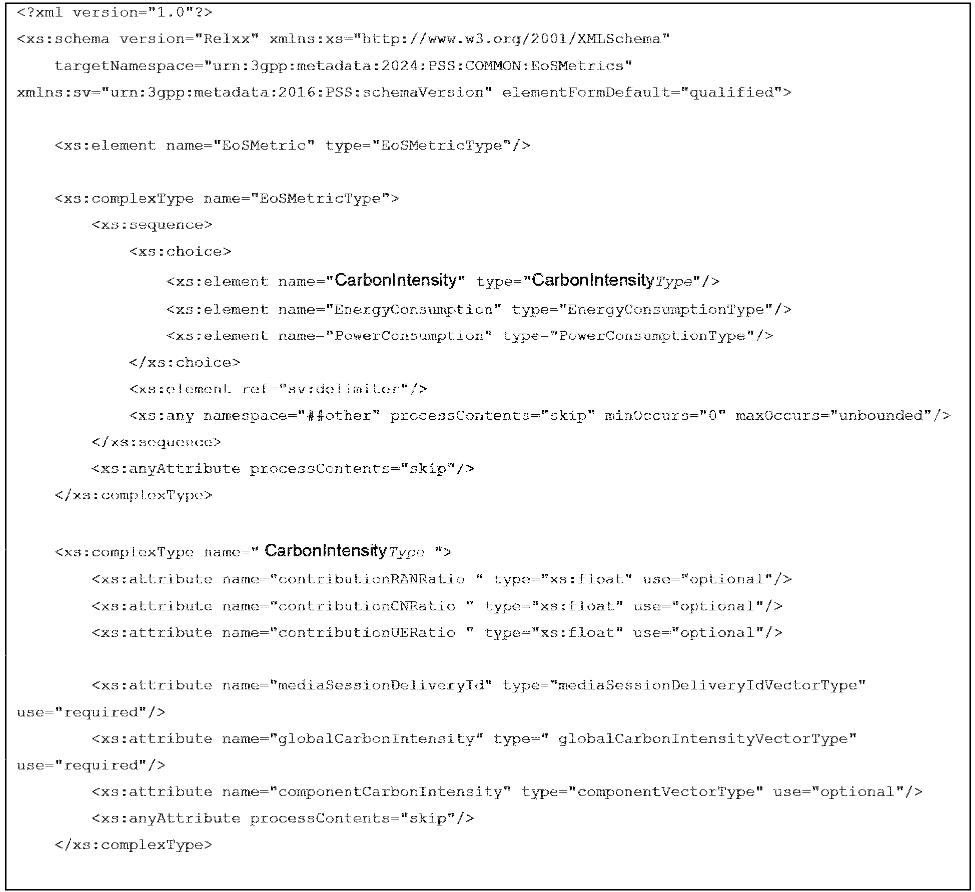

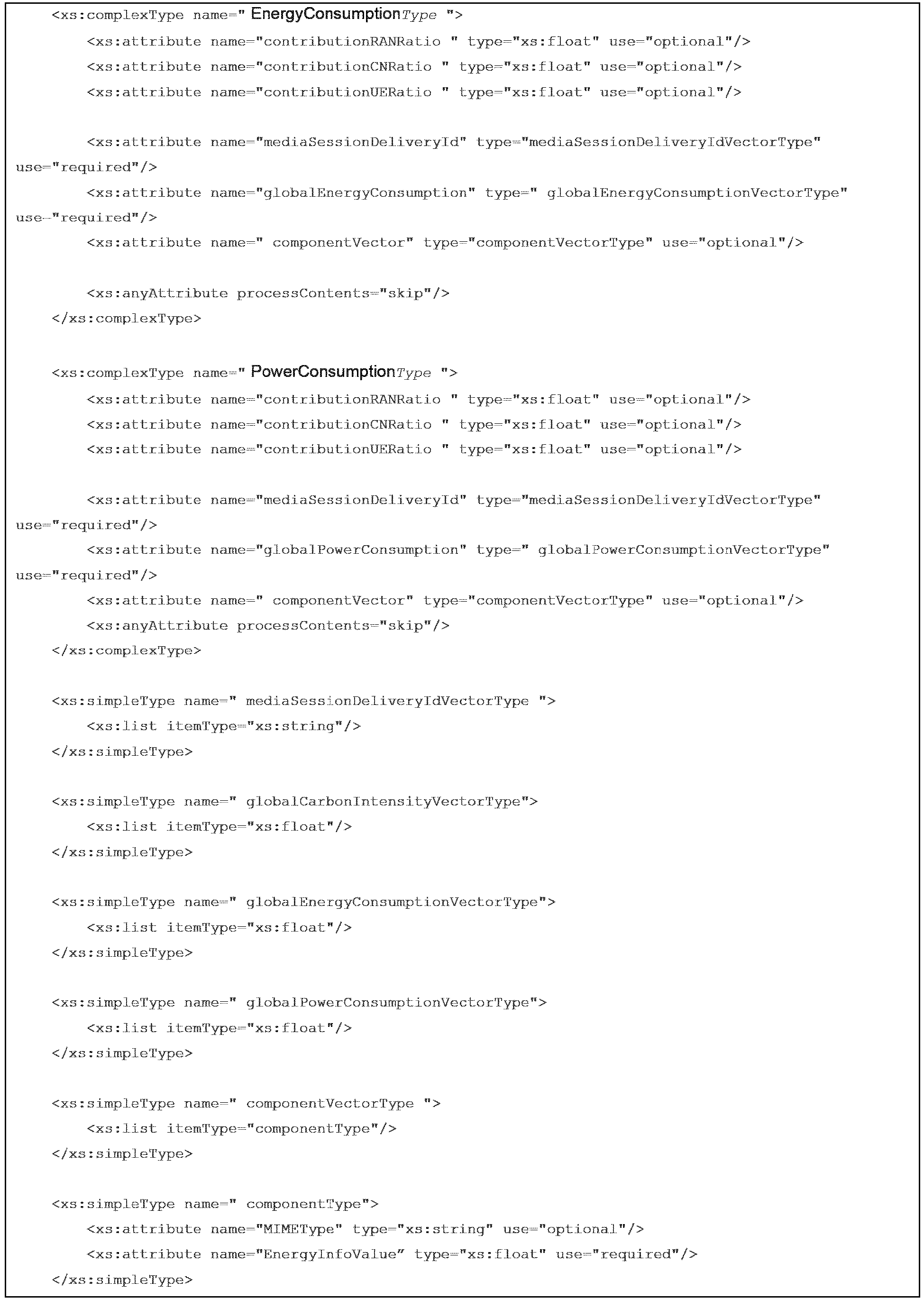

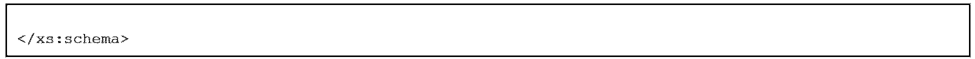

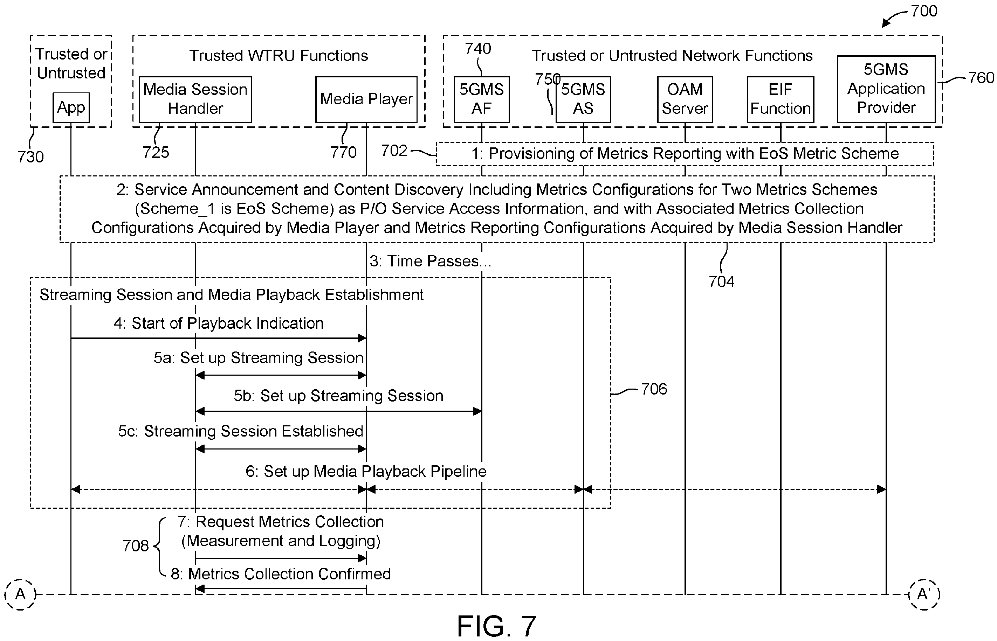

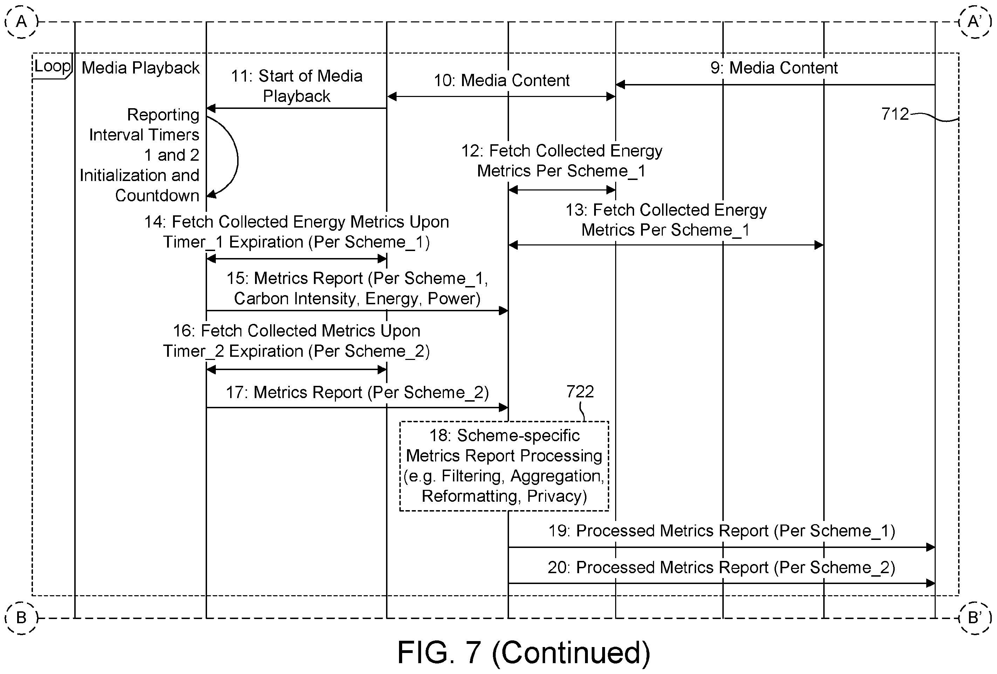

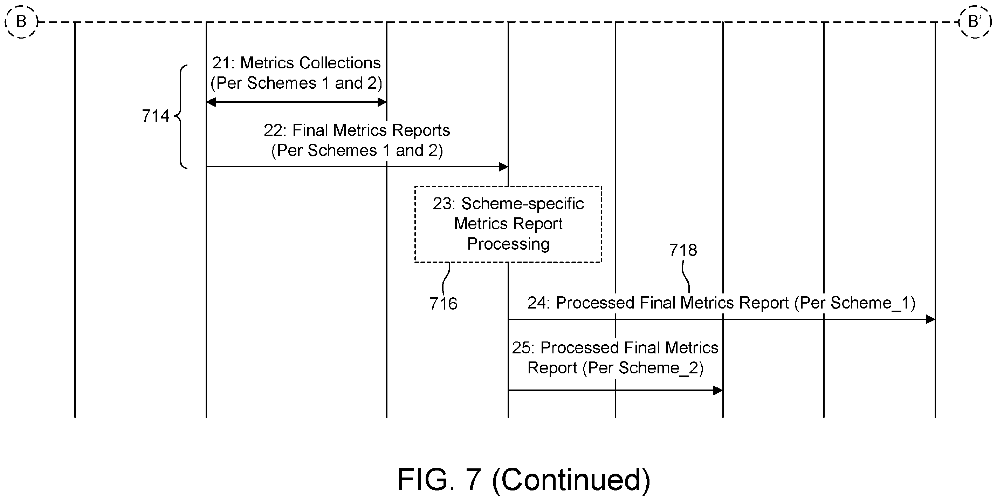

An EoS scheme AF-based reporting procedure in an example is provided. FIG. 7 illustrates a signaling diagram 700 of a first example where the EoS metrics collection and reporting is configured by 5GMSd AF 740. Signaling diagram 700 includes a trusted or untrusted application 730, trusted WTRU functions including a media sensor handler 725 and a media player 770, and trusted or untrusted network functions including a 5GMS AF 740, a 5GMS AS 750, an OAM server, an EIF function and a 5GMS application provider 760.

In this example, the metrics configuration provided by 5GMS AF 740 includes instructions/rules regarding EoS metrics collection (i.e., measurement and logging). At least one EoS scheme is sourced from 5GMS media application 730 provider which receives energy related information reports. The EoS metrics scheme may require the 5GMS client to perform metrics collection and subsequent metrics reporting to 5GM AF 740 according to the configuration rules of that scheme. The 5GMS client may include a new entity in the direct data collection and reporting module responsible for retrieving its energy related information (e.g., from media player 770, ...). Furthermore, 5GMSd AF 740 may be required to deliver metrics reports obtained from the 5GMS client to separate destination entities, upon optionally having performed post-processing of the original report information and insuring the privacy of the 5GMS client data, according to the configuration rules of the EoS metrics scheme.

At 702, 5GMS AF 740 is provisioned with two separate sets of metrics reporting configuration (i.e., EoSMetricsReportingConfiguration resource, described herein, and state of the art MetricsReportingConfiguration) information - metrics scheme_1 as defined by 5GMS application provider 760 (i.e., EoS scheme, described herein) and metrics scheme_2 from the state of the art as also defined by 5GMS application provider 760, each pertaining to metrics collection by media player 770, retrieval of those collected metrics from media player 770 by media session handler 725, and the generation and delivery of metrics reports from media session handler 725 to 5GMS AF 740. 5GMS AF 740 may be similarly provisioned with two separate sets of metrics reporting configuration information, associated with the metrics schemes 1 and 2, regarding required post-processing functionality and subsequent and separate delivery of processed metrics reports to 5GMS application provider 760. The scheme_1 is the EoS scheme to request the AF 740 to retrieve the energy metrics available at the WTRU media player 770 level including carbon intensity, energy consumption and/or power consumption.

At 704, 5GMS-Aware Application 730 triggers the service announcement and content discovery procedure. The service announcement may include the service access Information that contains metric configuration info for metrics schemes 1 and 2, with their associated metrics collection configurations acquired by media player 770 and metrics collection configurations acquired by media session handler 725. Time may pass until the 5GMS WTRU initiates session establishment and media playback.

At 706, a streaming session and media playback may be established. 5GMS-Aware Application 730 informs media player 770 of impending media playback. Media player 770 may requests the establishment of a streaming session with media session handler 725 which acknowledges the request. Media session handler 725 may request the establishment of a streaming session with 5GMS AF 740 which confirms the streaming session establishment. Media session handler 725 may inform media player 770 of the successful set-up of the streaming session. Media playback pipeline is set up between media player 770, 5GMS AS 750 and 5GMS application provider 760.

At 708, media session handler 725 queries media player 770 on its capability to perform metrics collection (measurement and logging function) in accordance with both schemes 1 and 2 as defined by its metrics configuration. At 708, media player 770 may be checked to verify it can support the reporting of EoS metrics. Media player 770 acknowledges its support for the collection of the required metrics of all configured schemes.

During the course of media playback 712, the following may be repeated, depending on the duration of the playback and the frequency of metrics reporting as set by the metrics configuration for each of the two schemes. Assuming a live streaming service, media content is delivered via push ingest from 5GMSd application provider 760 to 5GMSd AS 750. Media player 770 may fetch media content from 5GMSd AS 750 and begin media playback. Media player 770 may notify media session handler 725 of the start of media playback, causing media session handler 725 to initialize and begin countdown of separate metrics reporting interval timers for schemes 1 and 2. 5GMSd AF 740 may retrieve the logged metrics measurements from 5GMSd AS 750 according to scheme_1. 5GMSd AF 740 may retrieve the logged metrics measurements from the EIF function of the core network according to scheme_1. Upon expiration of timer_1 (associated with scheme_1), media session handler 725 may retrieve the logged metrics measurements from media player 770 according to scheme_1. In accordance with its metrics reporting configuration as provisioned in step 2, a metrics report for scheme_1 is sent from media session handler 725 to 5GMSd AF 740. Upon expiration of timer_2 (associated with scheme_2), media session handler 725 may retrieve the logged metrics measurements from media player 770 according to scheme_2. In accordance with its metrics reporting configuration as provisioned in 704, a metrics report for scheme_2 is sent from media session handler 725 to 5GMSd AF 740. At 722, in accordance with its metrics reporting configuration as provisioned in step 1, 5GMSd AF 740 performs separate post-processing in accordance with schemes 1 and 2 (e.g., filtering, aggregation, reformatting, privacy) of the received types of metrics reports. Furthermore, in accordance with its metrics reporting configuration as provisioned in 702 above, 5GMSd AF 740 may send a processed metrics report in accordance with scheme_1 to 5GMSd application provider 760. 5GMSd AF 740 may send a processed metrics report in accordance with scheme_2 to 5GMSd application provider 760. Upon the termination of media playback (as notified by 5GMSd-Aware application 730 to media player 770) a final round of metrics collection and reporting is performed:

At 714, the media session handler 725 may obtain the latest metrics measurements from media player 770 in accordance with schemes 1 and 2. These procedures may occur prior to the nominal expiration of the metrics reporting interval timers. Final metrics reports, in accordance with schemes 1 and 2 are sent by media session handler 725 to the 5GMSd AF 740. These procedures may occur prior to the expiration of the nominal metrics reporting intervals.

At 716, 5GMSd AF 760 may perform post-processing of the received final metrics reports in accordance with schemes 1 and 2.

At 718, in accordance with its metrics reporting configuration as provisioned in 702, a metrics report for scheme_2 is sent from media session handler 725 to 5GMSd AF 740. In accordance with its metrics reporting configuration as provisioned in step 1, 5GMSd AF 740 performs separate post-processing in accordance with schemes 1 and 2 (e.g., filtering, aggregation, reformatting, privacy) of the received types of metrics reports.

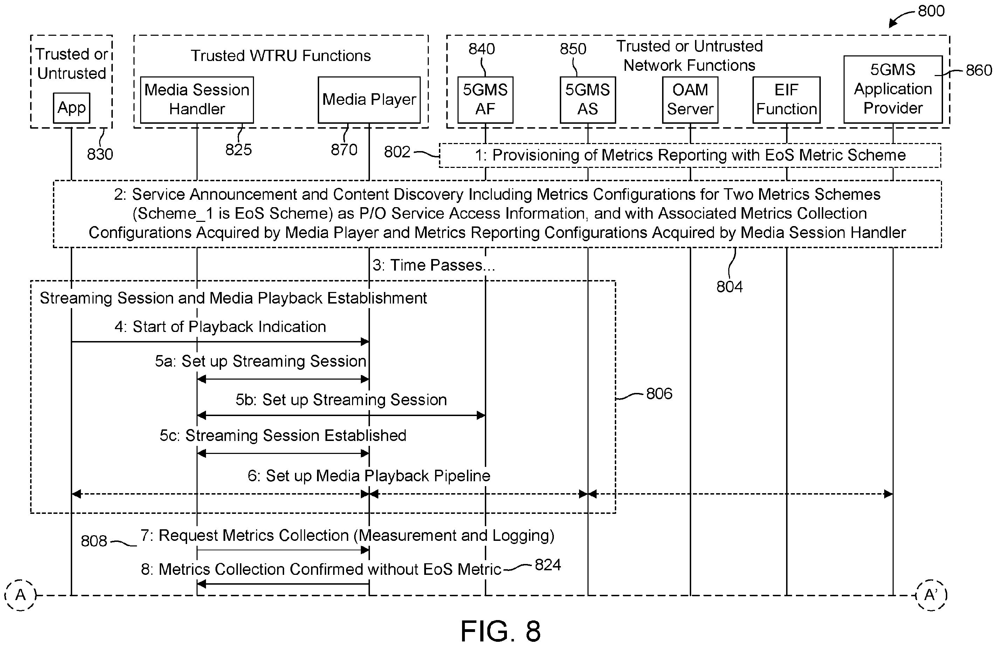

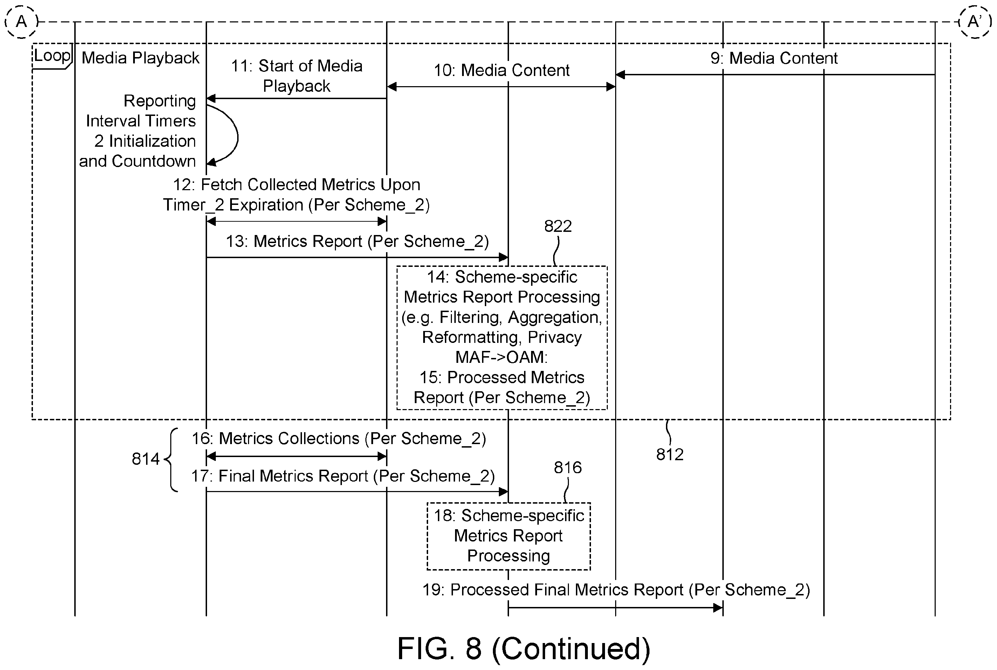

An EoS scheme AF-based reporting procedure in an example is provided. FIG. 8 illustrates a signaling diagram 800 of a second example where the EoS metrics collection and reporting is configured by 5GMSd AF 840. Signaling diagram 800 includes a trusted or untrusted application 830, trusted WTRU functions including a media sensor handler 825 and a media player 870, and trusted or untrusted network functions including a 5GMS AF 840, a 5GMS AS 850, an OAM server, an EIF function and a 5GMS application provider 860.

In this example, EoS Metrics reporting of 5GMS AF-840 based configuration may not be supported by media player 870. In this example, the metrics configuration may be provided by 5GMS AF 840 comprising instructions/rules regarding EoS metrics collection (i.e., measurement and logging). At least one EoS scheme is sourced from 5GMS media application provider 860 that receives energy related information reports. The EoS metrics scheme may require 5GMS client to perform metrics collection and subsequent metrics reporting to 5GMS AF 840 according to the configuration rules of that scheme. The 5GMS client may have a new entity in the direct data collection and reporting module responsible for retrieving its energy related information (e.g., from media player 870, ...). Furthermore, 5GMSd AF 840 may deliver metrics reports obtained from the 5GMS client to separate destination entities, upon optionally having performed post-processing of the original report information and insure the privacy of the 5GMS client data, according to the configuration rules of the EoS metrics scheme.

In this example and as a difference to the first example, AF 840 supports the EoS metric data collection but the 5GMS client does not support the reporting of such data to AF 840. This example may be extended to include the EIF function of the core network or 5GMS AS 850 does not support the reporting of such data to AF 840.

At 802, 5GMS AF 840 may be provisioned with two separate sets of metrics reporting configuration (i.e., EoSMetricsReportingConfiguration resource, described herein, and state of the art MetricsReportingConfiguration) information - metrics scheme_1 as defined by 5GMS application provider 860 (i.e., EoS scheme, described herein) and metrics scheme_2 from the state of the art as defined by 5GMS application provider 860 too, each pertaining to metrics collection by media player 870, retrieval of those collected metrics from media player 870 by the media session handler 825, and the generation and delivery of metrics reports from media session handler 825 to 5GMS AF 840. 5GMS AF 840 is similarly provisioned with two separate sets of metrics reporting configuration information, associated with the metrics schemes 1 and 2, regarding required post-processing functionality and subsequent and separate delivery of processed metrics reports to 5GMS application provider 860 and to the OAM Server. The scheme_1 is the EoS scheme to request the AF 840 to retrieve the energy metrics available at WTRU media player 870 level including carbon intensity, energy consumption and/or power consumption.

At 804, 5GMS-Aware application 830 may trigger the service announcement and content discovery procedure. The service announcement may include the service access information that contains metric configuration info for metrics schemes 1 and 2, with their associated metrics collection configurations acquired by media player 870 and metrics collection configurations acquired by media session handler 825. Time may pass until the 5GMS WTRU initiates session establishment and media playback.

At 806, the streaming session and media playback may be established. 5GMS-Aware application 830 may inform media player 870 of impending media playback. Media player 870 may request the establishment of a streaming session with media session handler 825 which acknowledges the request. Media session handler 825 may request the establishment of a streaming session with 5GMS AF 840 which confirms the streaming session establishment. Media session handler 825 may informs media player 870 of the successful set-up of the streaming session. The media playback pipeline is set up between media player 870, 5GMS AS 850 and the 5GMS application provider 860.

At 808, media session handler 825 may query media player 870 on its capability to perform metrics collection (measurement and logging function) in accordance with both schemes 1 and 2 as defined by its metrics configuration. At 808, media player 870 is checked to verify if it can support the reporting of EoS metrics. In this example, media player 870 is unable to report the metric. At 824, media player 870 acknowledges its support for the collection of the required metrics of the configured scheme 2.

During the course of media playback, via 812, 822, 814,and 816 may be repeated, depending on the duration of the playback and the frequency of metrics reporting as set by the metrics configuration for each of the two schemes.

At 812, media playback may be performed in a loop. Assuming a live streaming service, media content is delivered via push ingest from the 5GMSd application provider 860 to 5GMSd AS 850. Media player 870 may fetch media content from 5GMSd AS 850 and begin media playback. Media player 870 may notify media session handler 825 of the start of media playback, causing media session handler 825 to initialize and begin countdown of metric reporting interval timer for scheme 2. Upon expiration of timer_2 (associated with scheme_2), media session handler 825 may retrieve the logged metrics measurements from media player 870 according to scheme_2. In accordance with its metrics reporting configuration as provisioned at 804, a metrics report for scheme_2 may be sent from media session handler 825 to 5GMSd AF 840.

At 822, in accordance with its metrics reporting configuration as provisioned in step 1, 5GMSd AF 840 may perform post-processing in accordance with scheme 2 (e.g., filtering, aggregation, reformatting) of the received metric reports. Furthermore, in accordance with its metrics reporting configuration as provisioned at 802, 5GMSd AF 840 sends a processed metrics report in accordance with scheme_2 to the to 5GMSd application provider 860.

Upon the termination of media playback (as notified by the 5GMSd-Aware application 830 to media player 870) a final round of metric collection and reporting is performed: At 814, media session handler 825 may obtain the latest metrics measurements from media player 870 in accordance with scheme 2. These procedures may occur prior to the nominal expiration of the metric reporting interval timer. A final metric report, in accordance with scheme 2 is sent by the media session handler 825 to 5GMSd AF 840. These procedures may occur prior to the expiration of the nominal metrics reporting intervals.

At 816, 5GMSd AF 840 may perform post-processing of the received final metric report in accordance with scheme 2. Processing a final metrics report as performed in 822 may occur.

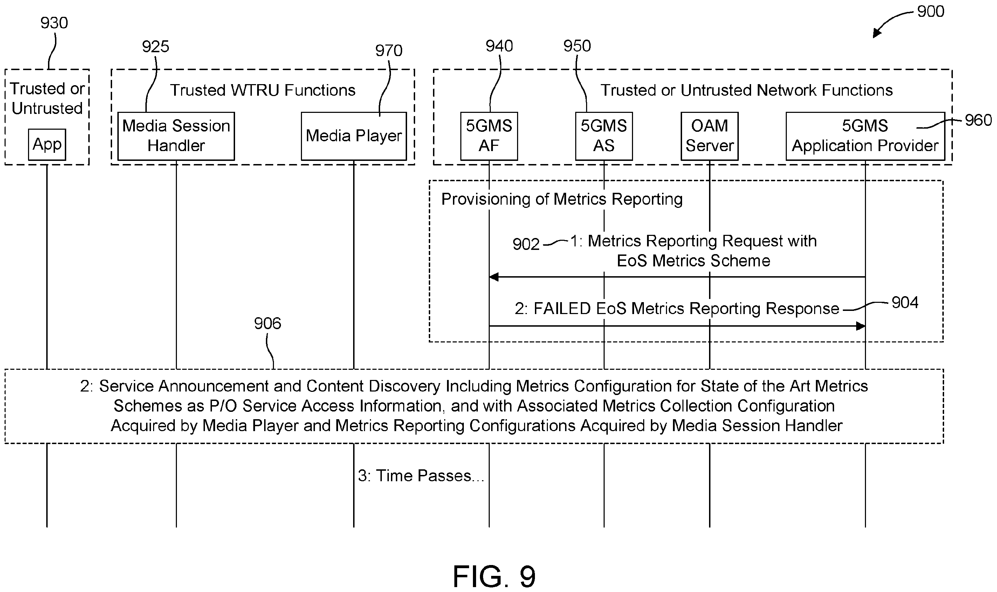

An EoS scheme AF-based reporting procedure in an example is provided. FIG. 9 illustrates a signaling diagram 900 of third example where the EoS metrics collection and reporting is configured by 5GMSd AF 940. Signaling diagram 900 includes a trusted or untrusted application 930, trusted WTRU functions including a media sensor handler 925 and a media player 970, and trusted or untrusted network functions including a 5GMS AF 940, a 5GMS AS 950, an OAM server and a 5GMS application provider 960.

In this example, EoS metrics reporting may not be supported by 5GMS AF 940. In this example, it is assumed that the metrics configuration provided by 5GMS AF 940 comprises instructions/rules regarding EoS metrics collection (i.e., measurement and logging). At least one EoS scheme may be sourced from a 5GMS media application provider 960 that is to receive energy related information reports. The EoS metrics scheme may require the 5GMS Client to perform metrics collection and subsequent metrics reporting to 5GM AF 940 according to the configuration rules of that scheme. Essentially, the 5GMS client may have a new entity in the direct data collection and reporting module responsible for retrieving its energy related information (e.g., from a media player 970, ...). Furthermore, 5GMSd AF 940 may deliver metrics reports obtained from 5GMS client to separate destination entities, upon optionally having performed post-processing of the original report information and insuring the privacy of the 5GMS client data, according to the configuration rules of the EoS metrics scheme. In this example and as a difference to the examples 700, 800, AF 940 does not support the EoS metric data collection.

At 902, a provisioning of the metrics reporting may occur. 5GMS AF 940 may be provisioned with the EoS metrics reporting configuration (i.e., EoSMetricsReportingConfiguration resource, described herein) information - metrics scheme as defined by the 5GMS application provider 960 (i.e., EoS scheme, described herein). The scheme requests the AF 940 to retrieve the energy metrics available at WTRU media player 970 level for carbon intensity, energy consumption and/or power consumption. The selected AF 940 does not support the EoS metrics scheme and the provisioning of the reporting configuration fails with a response at 904. At 906, 5GMS-aware application 930 triggers the service announcement and content discovery procedure. The service announcement includes the service access information that contains metric configuration info for metrics schemes of the state of the art, with their associated metrics collection configurations acquired by media player 970 and metrics collection configurations acquired by the media session handler 925.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A wireless transmit and receive unit (WTRU) comprising:
a processor; and
a transceiver communicatively coupled to the processor, the processor and transceiver operating to:
monitor an energy consumption and/or a carbon emission of a provisioning session.

2. A method for energy data collection reporting, the method comprising:
monitor an energy consumption and/or a carbon emission of a provisioning session.

3. The WTRU of claim 1 or the method of claim 2, wherein the monitoring occurs at one of a plurality of levels including at a provisioning level, a media delivery session level, and a component level of a media delivery session.

4. The WTRU of any one of claim 1 and claim 3 or the method of any one of claims 2-3, wherein the processor and transceiver further operate to receive reports on energy related information for at least one of a PDU session component, a PDU session and a slice.

5. The WTRU of any one of claim 1 and claims 3-4 or the method of any one of claims 2-4, wherein the received reports are at least one level of granularity selected from a WTRU level, a RAN level , a CN level during downlink or uplink media delivery sessions.

6. The WTRU of any one of claim 1 and claims 3-5 or the method of any one of claims 2-5, further comprising a media session handler configured to perform collecting and reporting of energy consumption.

7. The WTRU of any one of claim 1 and claims 3-6 or the method of any one of claims 2-6, further comprising a media player configured to receive and play video content within the WTRU.

8. The WTRU of any one of claim 1 and claims 3-7 or the method of any one of claims 2-7, further comprising a display configured to receive a stream from the media player to depict the stream to a user.

9. The WTRU of any one of claim 1 and claims 3-8 or the method of any one of claims 2-8, wherein the reporting occurs via an EoS metrics reporting configuration.

10. The WTRU of any one of claim 1 and claims 3-9 or the method of any one of claims 2-9, wherein the EoS metrics reporting configuration defines rules for EoS metrics collection.

11. The WTRU of any one of claim 1 and claims 3-10 or the method of any one of claims 2-10, wherein the WTRU requests an application function (AF) to retrieve energy metrics for a media player level.

12. The WTRU of any one of claim 1 and claims 3-11 or the method of any one of claims 2-11, wherein the energy metrics includes at least one of carbon intensity, energy consumption, and power consumption.

13. The WTRU of any one of claim 1 and claims 3-12 or the method of any one of claims 2-12, wherein the reporting occurs via a EoS metric scheme.

14. The WTRU of any one of claim 1 and claims 3-13 or the method of any one of claims 2-13, wherein the reporting is capable of accounting for privacy issues associated with client data.
